# EUROPEAN PATENT APPLICATION

(11) **EP 4 545 296 A1**
(43) Date of publication of application: **30.04.2025**
(21) Application number: 24830608.6
(22) Date of filing: 20.06.2024
(51) Int. Cl.: B32B 27/00, C08J 5/18, C09D 183/04, C09D 5/33

(54) **COMPOSITE MATERIAL AND PREPARATION METHOD THEREFOR**

(30) Priority: 26.06.2023 CN 202310767734
(71) Applicant: Huawei Technologies Co., Ltd., Shenzhen, Guangdong 518129 (CN)
(72) Inventor: LI, Yangyang, Shenzhen, Guangdong 518129 (CN); CAI, Ming, Shenzhen, Guangdong 518129 (CN); SU, Zhaoliang, Shenzhen, Guangdong 518129 (CN); LIU, Guoqiang, Shenzhen, Guangdong 518129 (CN)
(74) Representative: MERH-IP Matias Erny Reichl Hoffmann Patentanwälte PartG mbB
(86) International application number: PCT/CN2024/100404
(87) International publication number: WO 2025/001962

(57) **Abstract**

This application discloses a composite material and a preparation method therefor, and belongs to the field of organic materials. The composite material includes a transparent substrate layer and a first protective layer laminated on the transparent substrate layer. A raw material for preparing the transparent substrate layer includes a matrix material, an ultraviolet absorber, and an antioxidant. At least one of polyfunctional acrylic resin, epoxy-modified acrylic resin, polyurethane-modified acrylic resin, fluoropolyether-modified acrylic resin, polysiloxane resin, epoxy resin, and polyurethane resin is selected as a raw material for preparing the first protective layer. The composite material has not only excellent ultraviolet yellowing resistance but also excellent smudge yellowing resistance.

## Description

This application claims priority to Chinese Patent Application No. 202310767734.1, filed on June 26, 2023 and entitled "COMPOSITE MATERIAL AND PREPARATION METHOD THEREFOR", which is incorporated herein by reference in its entirety.

### TECHNICAL FIELD

The present disclosure relates to the field of organic materials, and in particular, to a composite material and a preparation method therefor.

### BACKGROUND

A transparent protective case for a mobile phone can not only protect the mobile phone, but also display materials and a design of the mobile phone. TPU (Thermoplastic Urethane, thermoplastic polyurethane elastomer) is usually used to prepare a transparent protective case due to properties of high transparency and low hardness of the TPU.

However, the transparent protective case made of the TPU is prone to irreversible yellowing after being used for a specific period of time, affecting use experience. It can be learned that it is very necessary to improve yellowing resistance of the transparent protective case.

### CONTENT OF THE PRESENT DISCLOSURE

In view of this, the present disclosure provides a composite material and a preparation method therefor, to resolve a technical problem of poor yellowing resistance of a transparent protective case in a related technology.

Specifically, the following technical solutions are included:
In one aspect, a composite material is provided. The composite material includes a transparent substrate layer and a first protective layer laminated on the transparent substrate layer.

A raw material for preparing the transparent substrate layer includes a matrix material, an ultraviolet absorber, and an antioxidant.

At least one of polyfunctional acrylic resin, epoxy-modified acrylic resin, polyurethane-modified acrylic resin, fluoropolyether-modified acrylic resin, polysiloxane resin, epoxy resin, and polyurethane resin is selected as a raw material for preparing the first protective layer.

The composite material provided in embodiments of the present disclosure includes the transparent substrate layer and the first protective layer. The raw material for preparing the transparent substrate layer includes the ultraviolet absorber and the antioxidant. The ultraviolet absorber can absorb ultraviolet rays to reduce damage caused by UV light irradiation to the transparent substrate layer, and improve weather resistance and aging resistance of the transparent substrate layer, so as to delay yellowing of the transparent substrate layer. The antioxidant and the ultraviolet absorber work together to achieve good synergistic aging resistance effect and further improve UV yellowing resistance of the transparent substrate layer itself. The first protective layer is arranged on the transparent substrate layer. At least one of the polyfunctional acrylic resin, the epoxy-modified acrylic resin, the polyurethane-modified acrylic resin, the fluoropolyether-modified acrylic resin, the polysiloxane resin, the epoxy resin, and the polyurethane resin is selected as a raw material for preparing the first protective layer. In this case, due to good density and hardness, this type of resin layer can avoid yellowing due to permeation of sweat and smudges such as cosmetics into the transparent substrate layer, and improve wear resistance of the transparent substrate layer, so as to increase a yellowing resistance life of the transparent substrate layer. It can be learned that the composite material provided in embodiments of the present disclosure has not only excellent ultraviolet yellowing resistance but also excellent smudge yellowing resistance.

In some possible implementations, a degree of cure of the first protective layer is greater than or equal to 85%, to ensure high density of the first protective layer, and effectively prevent smudges such as a cosmetics or moisture from penetrating into the transparent substrate layer.

In some possible implementations, the composite material further includes a second protective layer, and one of a reflection enhancing layer and a smudge-resistant layer is selected as the second protective layer.

In some possible implementations, the composite material further includes a third protective layer, and the other of the reflection enhancing layer and the smudge-resistant layer is selected as the third protective layer.

The reflection enhancing layer can further improve surface hardness of the composite material, and can reflect UV light, thereby further preventing the UV light from entering the transparent substrate layer, and effectively improving UV yellowing resistance of the composite material.

The smudge-resistant layer can improve hydrophobic and oil-phobic properties of a surface of the composite material, and reduce residue of a smudge on the surface of the composite material. This can effectively prevent smudges such as chemicals and moisture from penetrating into the transparent substrate layer, and further prevent the transparent substrate layer from yellowing due to penetration of the smudges such as chemicals and moisture.

In some possible implementations, a raw material for preparing the reflection enhancing layer includes at least one of titanium oxide, zirconium oxide, tin oxide, zinc oxide, silicon oxide, niobium oxide, aluminum oxide, chromium oxide, magnesium oxide, germanium oxide, gallium oxide, antimony oxide, and platinum oxide.

In some possible implementations, a raw material for preparing the smudge-resistant layer is at least one of fluorine-containing polyfunctional acrylic resin, fluorine-containing epoxy-modified acrylic resin, fluorine-containing polyurethane-modified acrylic resin, fluorine-containing fluoropolyether-modified acrylic resin, fluorine-containing polysiloxane resin, fluorine-containing epoxy resin, and fluorine-containing polyurethane resin.

In some possible implementations, the smudge-resistant layer is an anti-fingerprint coating.

Because the anti-fingerprint coating has good hydrophobic and oil-phobic properties, the composite material has excellent smooth hand feeling and is not easy to produce a fingerprint.

In some possible implementations, the matrix material meets at least one of the following conditions: transmittance ≥ 50%, haze ≤ 20%, hardness ≥ Shore hardness 60 A, tensile strength ≥ 30 MPa, and elongation at break ≥ 50%.

By limiting physical properties of the matrix material as above, it is ensured that the transparent substrate has good transparency, impact resistance, and tactile feeling, to meet needs of protective cases for hand-touch devices such as a mobile phone.

In some possible implementations, at least one of TPU, TPE, TPEE, PC, PMMA, TPO, and transparent nylon is selected as the matrix material.

In some possible implementations, in the raw material for preparing the transparent substrate layer, a mass percentage of the matrix material ranges from 94% to 97%, a mass percentage of the ultraviolet absorber ranges from 2% to 5%, and a mass percentage of the antioxidant ranges from 0.1% to 1.5%.

In some possible implementations, a structural form of the composite material is a plate.

In some possible implementations, a structural form of the composite material is a case.

In some possible implementations, the case is a protective case for a handheld device, and the handheld device includes a mobile phone, a tablet computer, a camera, or a remote control, for example, a protective case for a mobile phone.

In another aspect, a method for preparing a composite material is provided, where the composite material is claimed according to any one of the foregoing implementations.

The method for preparing the composite material includes: preparing the transparent substrate layer; and
preparing the first protective layer on at least one surface of the transparent substrate layer.

In some possible implementations, the method for preparing the composite material further includes: preparing the second protective layer on a surface that is of the first protective layer and that is away from the transparent substrate layer.

In some possible implementations, the method for preparing the composite material further includes: preparing the third protective layer on a surface that is of the second protective layer and that is away from the first protective layer.

### BRIEF DESCRIPTION OF DRAWINGS

FIG. 1 is a diagram of a structure of a first example composite material according to an embodiment of the present disclosure;
FIG. 2 is a diagram of a structure of a second example composite material according to an embodiment of the present disclosure;
FIG. 3 is a diagram of a structure of a third example composite material according to an embodiment of the present disclosure;
FIG. 4 is a diagram of a structure of a fourth example composite material according to an embodiment of the present disclosure; and
FIG. 5 is a diagram of a structure of a fifth example composite material according to an embodiment of the present disclosure.

Reference numerals have the following meanings:
100: transparent substrate layer;
200: first protective layer;
300: second protective layer;
400: third protective layer;
001: reflection enhancing layer; and
002: smudge-resistant layer.

### DESCRIPTION OF EMBODIMENTS

The following clearly and completely describes the technical solutions in embodiments of the present disclosure with reference to the accompanying drawings in embodiments of the present disclosure. It is clear that the described embodiments are some but not all of embodiments of the present disclosure. All other embodiments obtained by a person of ordinary skill in the art based on embodiments of the present disclosure without creative efforts shall fall within the protection scope of the present disclosure.

Example embodiments are described in detail herein, and examples of the example embodiments are presented in the accompanying drawings. When the following descriptions relate to the accompanying drawings, unless specified otherwise, same numbers in different accompanying drawings represent a same or similar element. Implementations described in the following example embodiments do not represent all implementations consistent with the present disclosure. On the contrary, they are only examples of apparatuses and methods that are described in the appended claims in detail and that are consistent with some aspects of the present disclosure.

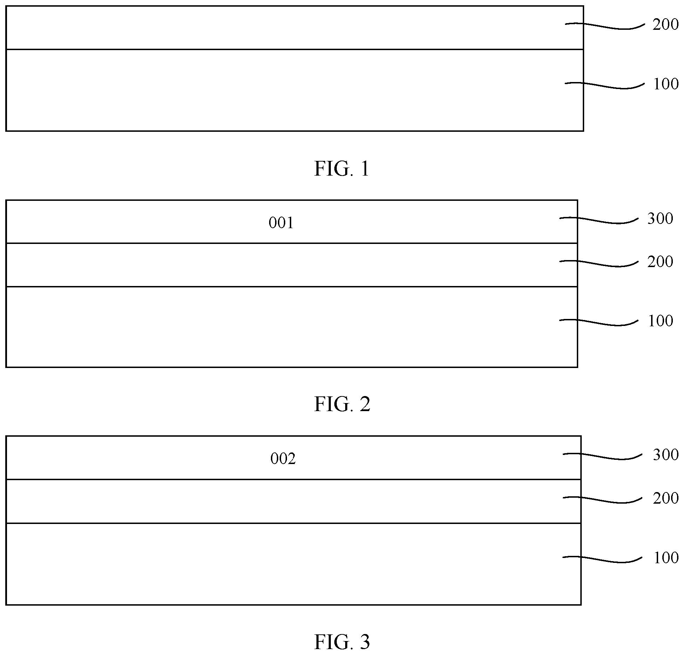

In descriptions of the present disclosure, it should be understood that orientation or position relationships indicated by terms "up", "down", and the like are based on orientation or position relationships shown in the accompanying drawings, and are merely intended to facilitate description and simplify description of the present disclosure, but do not indicate or imply that an indicated apparatus or component needs to have specific orientation or needs to be constructed and operated in specific orientation. Therefore, this cannot be understood as a limitation on the present disclosure. For example, these orientation nouns are generally based on a relative relationship of orientation shown in FIG. 1 to FIG. 5, and these orientation nouns are used only to describe a structure and a relationship between structures more clearly, but not to describe absolute orientation. When a product is placed in different postures, orientation may change, for example, "up" and "down" may be interchanged.

In a related technology, after being used for a specific period of time, a transparent protective case made of a TPU material is prone to an irreversible yellowing phenomenon due to ultraviolet (Ultraviolet, UV). This affects user experience. It can be learned that it is very necessary to improve yellowing resistance of the transparent protective case.

Embodiments of the present disclosure provide a composite material. The composite material includes a transparent substrate layer and a first protective layer laminated on the transparent substrate layer. A raw material for preparing the transparent substrate layer includes a matrix material, an ultraviolet absorber, and an antioxidant. At least one of polyfunctional acrylic resin, epoxy-modified acrylic resin, polyurethane-modified acrylic resin, fluoropolyether-modified acrylic resin, polysiloxane resin, epoxy resin, and polyurethane resin is selected as a raw material for preparing the first protective layer.

The composite material provided in embodiments of the present disclosure includes the transparent substrate layer and the first protective layer. The raw material for preparing the transparent substrate layer includes the ultraviolet absorber and the antioxidant. The ultraviolet absorber can absorb ultraviolet rays to reduce damage caused by UV light irradiation to the transparent substrate layer, and improve weather resistance and aging resistance of the transparent substrate layer, so as to delay yellowing of the transparent substrate layer. The antioxidant and the ultraviolet absorber work together to achieve good synergistic aging resistance effect and further improve UV yellowing resistance of the transparent substrate layer itself. The first protective layer is arranged on the transparent substrate layer. At least one of the polyfunctional acrylic resin, the epoxy-modified acrylic resin, the polyurethane-modified acrylic resin, the fluoropolyether-modified acrylic resin, the polysiloxane resin, the epoxy resin, and the polyurethane resin is selected as a raw material for preparing the first protective layer. In this case, due to good density and hardness, this type of resin layer can avoid yellowing due to permeation of sweat and smudges such as cosmetics into the transparent substrate layer, and improve wear resistance of the transparent substrate layer, so as to increase a yellowing resistance life of the transparent substrate layer. It can be learned that the composite material provided in embodiments of the present disclosure has not only excellent ultraviolet yellowing resistance but also excellent smudge yellowing resistance.

Studies have found that users' hands often have residue of chemicals such as cosmetics and hand creams. When the residue of the chemicals on the users' hands, along with hand sweat, penetrates into materials such as TPU, chemical compounds that are included in the chemicals, such as tocopheryl acetate, are easily hydrolyzed to tocopherol, and the tocopherol is oxidized to tocoquinone by hand sweat and light. The tocoquinone is yellowish brown, causing yellowing of the material due to infiltration of a smudge. In embodiments of the present disclosure, the first protective layer is further added on the transparent substrate layer, so that good density and a hardness feature of the first protective layer can help effectively prevent the chemicals and hand sweat from penetrating into the transparent substrate layer, thereby improving smudge yellowing resistance effect of the transparent substrate layer.

For the transparent substrate layer, a matrix material of the transparent substrate layer meets at least one of the following conditions: transmittance ≥ 50%, haze ≤ 20%, hardness ≥ Shore hardness 60 A, tensile strength ≥ 30 MPa, and elongation at break ≥ 50%.

In some examples, the matrix material may meet at least transmittance ≥ 50% and haze ≤ 20%. On this basis, the matrix material may meet at least one of the following conditions: hardness ≥ Shore hardness 60 A, tensile strength ≥ 30 MPa, and elongation at break ≥ 50%. For example, the matrix material may meet all the foregoing conditions.

By limiting physical properties of the matrix material as above, it is ensured that the transparent substrate has good transparency, impact resistance, and tactile feeling, to meet needs of protective cases for hand-touch devices such as a mobile phone.

For example, the matrix material that meets at least one of the foregoing conditions may be selected from at least one of TPU (Thermoplastic Urethane, thermoplastic polyurethane elastomer), TPE (Thermoplastic Elastomer, thermoplastic elastomer), TPEE (Thermoplastic Polyester Elastomer, thermoplastic polyester elastomer), PC (Polycarbonate, polycarbonate), PMMA (Polymethyl Methacrylate, polymethyl methacrylate), TPO (Thermoplastic polyolefin, thermoplastic polyolefin), and transparent nylon (Transparent nylon).

In embodiments of the present disclosure, an ultraviolet absorber that can be applied to the foregoing matrix material and that can achieve good ultraviolet absorption effect includes but is not limited to: a salicylate ester ultraviolet absorber, a benzophenone ultraviolet absorber, a benzotriazole ultraviolet absorber, a substituted acrylonitrile ultraviolet absorber, a triazine ultraviolet absorber, and a hindered amine ultraviolet absorber.

For example, the ultraviolet absorber in embodiments of the present disclosure includes but is not limited to the following: an ultraviolet absorber UV-0 (2,4-dihydroxybenzophenone), an ultraviolet absorber UV-1 (N-(ethoxycarbonylphenyl)-N'-methyl-N'-phenylformamidine), an ultraviolet absorber UV-9 (4-methoxy-2-hydroxybenzophenone), an ultraviolet absorber UV-234 (2-(2H-benzotriazol-2-yl)-4,6-bis(1-methyl-1-phenylethyl)phenol), an ultraviolet absorber UV-326 (2'-(2'-hydroxy-3'-tert-butyl-5'-methylphenyl)-5-chlorobenzotriazole), an ultraviolet absorber UV-327 (2-(2'-hydroxy-3',5'-di-tert-butylphenyl)-5-chlorobenzotriazole), an ultraviolet absorber UV-328 (2-(2'-hydroxy-3',5'-di-tert-pentylphenyl)benzotriazole), an ultraviolet absorber UV-329 (2-(2'-hydroxy-5'-tert-octylphenyl)benzotriazole), an ultraviolet absorber UV-360 (2,2'-methylenebis(4-tert-octyl-6-benzotriazolylphenol)), an ultraviolet absorber UV-531 (2-hydroxy-4-octyloxybenzophenone), an ultraviolet absorber UV-1164 (2-(4,6-bis(2,4-dimethylphenyl)-1,3,5-triazine-2-yl)-5-octyloxyphenol), an ultraviolet absorber UV-1577 (2-(4,6-diphenyl-1,3,5-triazine-2-yl)-5-hexyloxy-phenol), and an ultraviolet absorber UV-P (2-(2'-hydroxy-5'-methylphenyl)benzotriazole).

In embodiments of the present disclosure, an antioxidant that can be applied to the foregoing matrix material and work with the ultraviolet absorber may be a hindered phenol antioxidant, a thioester antioxidant, or the like. Some example antioxidants include but are not limited to: an antioxidant 1010, an antioxidant 1076, an antioxidant 168, an antioxidant 245, an antioxidant 1790, an antioxidant 330, an antioxidant DSTP, an antioxidant DSTDP, and the like.

In some examples, if a mass percentage of the raw material for preparing the transparent substrate layer is 100%, a mass percentage of the matrix material ranges from 94% to 97%, a mass percentage of the ultraviolet absorber ranges from 2% to 5%, and a mass percentage of the antioxidant ranges from 0.1% to 1.5%.

For example, the mass percentage of the matrix material includes but is not limited to 94%, 94.5%, 95%, 95.5%, 96%, 96.5%, 97%, and the like, the mass percentage of the ultraviolet absorber includes but is not limited to 2%, 2.5%, 3%, 3.5%, 4%, 4.5%, 5%, and the like, and the mass percentage of the antioxidant includes but is not limited to 0.1%, 0.2%, 0.3%, 0.4%, 0.5%, 0.6%, 0.7%, 0.8%, 0.9%, 1%, 1.1%, 1.2%, 1.3%, 1.4%, 1.5%, and the like.

The matrix material, the ultraviolet absorber, and the antioxidant work synergistically at the above ratio to ensure that a prepared transparent substrate layer has excellent transparency, mechanical performance, and tactile feeling, and excellent UV yellowing resistance and smudge yellowing resistance.

In application, the matrix material may be in a particle form. For example, a particle size of the matrix material may be 1 mm to 10 mm, to facilitate storage and melting processing.

In embodiments of the present disclosure, the first protective layer is a dense resin layer, and a degree of cure of the first protective layer is greater than or equal to 85%. For example, the degree of cure of the first protective layer may further be greater than or equal to 90%, and may further be greater than or equal to 95%. This can ensure high density of the first protective layer, thereby effectively preventing smudges such as chemicals and moisture from penetrating into the transparent substrate layer.

At least one of the polyfunctional acrylic resin, the epoxy-modified acrylic resin, the polyurethane-modified acrylic resin, the fluoropolyether-modified acrylic resin, the polysiloxane resin, the epoxy resin, and the polyurethane resin is selected as the raw material for preparing the first protective layer.

Functionality of the polyfunctional acrylic resin may be 2-12, and further be 2-6. Some applicable polyfunctional acrylic resins include but are not limited to polyurethane acrylate, polyester acrylate, epoxy acrylate, and the like.

For example, the polyfunctional polyurethane acrylate includes but is not limited to at least one of aromatic polyurethane hexaacrylate resin, aromatic polyurethane triacrylate resin, aromatic polyurethane diacrylate resin, aliphatic polyurethane methyl pentaacrylate resin, aliphatic polyurethane methyl hexaacrylate resin, aliphatic polyurethane methyl tetraacrylate resin, aliphatic polyurethane trimethacrylate resin, aliphatic polyurethane tetramethacrylate resin, and aliphatic polyurethane pentamethacrylate resin.

In some implementations, the composite material provided in embodiments of the present disclosure further includes a second protective layer, and one of a reflection enhancing layer and a smudge-resistant layer is selected as the second protective layer.

The reflection enhancing layer can further improve surface hardness of the composite material, and can reflect UV light, thereby further preventing the UV light from entering the transparent substrate layer, and effectively improving UV yellowing resistance of the composite material.

The smudge-resistant layer can improve hydrophobic and oil-phobic properties of a surface of the composite material, and reduce residue of a smudge on the surface of the composite material. This can effectively prevent smudges such as chemicals and moisture from penetrating into the transparent substrate layer, and further prevent the transparent substrate layer from yellowing due to penetration of the smudges such as chemicals and moisture.

In some implementations, the composite material provided in embodiments of the present disclosure further includes a third protective layer, the third protective layer is different from the second protective layer, and the other of the reflection enhancing layer and the smudge-resistant layer is selected as the third protective layer.

The third protective layer is further arranged, to further ensure that the transparent substrate layer can effectively avoid not only yellowing of the transparent substrate layer due to UV light, but also yellowing of the transparent substrate layer due to intrusion of the smudge such as chemicals and moisture.

In some examples, as shown in FIG. 1, a composite material provided in an embodiment of the present disclosure includes a transparent substrate layer 100 and a first protective layer 200. The first protective layer 200 is laminated on at least one surface of the transparent substrate layer 100. For example, the first protective layer 200 is laminated on an upper surface of the transparent substrate layer 100 shown in FIG. 1. Certainly, the first protective layer 200 may alternatively be laminated on a lower surface of the transparent substrate layer 100.

In some examples, as shown in FIG. 2, a composite material provided in an embodiment of the present disclosure includes a transparent substrate layer 100, a first protective layer 200, and a second protective layer 300. The first protective layer 200 is laminated on at least one surface of the transparent substrate layer 100. The second protective layer 300 is laminated on a surface that is of the first protective layer 200 and that is away from the transparent substrate layer 100. The second protective layer 300 is a reflection enhancing layer 001.

In some examples, as shown in FIG. 3, a composite material provided in an embodiment of the present disclosure includes a transparent substrate layer 100, a first protective layer 200, and a second protective layer 300. The first protective layer 200 is laminated on at least one surface of the transparent substrate layer 100. The second protective layer 300 is laminated on a surface that is of the first protective layer 200 and that is away from the transparent substrate layer 100. The second protective layer 300 is a smudge-resistant layer 002.

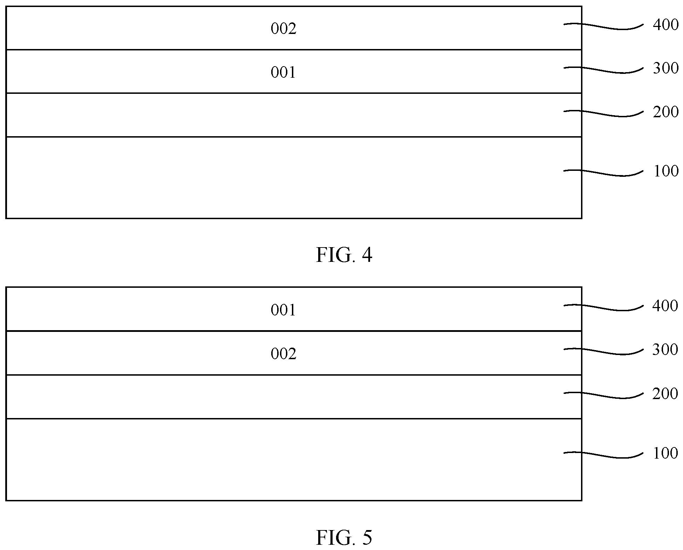

In some examples, as shown in FIG. 4, a composite material provided in an embodiment of the present disclosure includes a transparent substrate layer 100, a first protective layer 200, a second protective layer 300, and a third protective layer 400. The first protective layer 200 is laminated on at least one surface of the transparent substrate layer 100. The second protective layer 300 is laminated on a surface that is of the first protective layer 200 and that is away from the transparent substrate layer 100. The third protective layer 400 is laminated on a surface that is of the second protective layer 300 and that is away from the first protective layer 200. The second protective layer 300 is a reflection enhancing layer 001, and the third protective layer 400 is a smudge-resistant layer 002.

In some examples, as shown in FIG. 5, a composite material provided in an embodiment of the present disclosure includes a transparent substrate layer 100, a first protective layer 200, a second protective layer 300, and a third protective layer 400. The first protective layer 200 is laminated on at least one surface of the transparent substrate layer 100. The second protective layer 300 is laminated on a surface that is of the first protective layer 200 and that is away from the transparent substrate layer 100. The third protective layer 400 is laminated on a surface that is of the second protective layer 300 and that is away from the first protective layer 200. The second protective layer 300 is a smudge-resistant layer 002, and the third protective layer 400 is reflection enhancing layer 001.

On the basis of ensuring yellowing resistance of the composite material, a thickness of each layer of the composite material can be determined according to an actual application scenario of the composite material.

For example, the composite material is used as a case. A thickness of the transparent substrate layer may be 0.3 mm to 2 mm, a thickness of the first protective layer may be 1 µm to 30 µm, a thickness of the reflection enhancing layer may be 10 nm to 300 nm, and a thickness of the smudge-resistant layer may be 1 µm to 10 µm.

The thickness of the transparent substrate layer includes but is not limited to 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, and the like.

The thickness of the first protective layer includes but is not limited to 1 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, and the like.

The thickness of the reflection enhancing layer includes but is not limited to 50 nm, 70 nm, 100 nm, 120 nm, 150 nm, 170 nm, 200 nm, 230 nm, 250 nm, 280 nm, 300 nm, and the like.

The thickness of the smudge-resistant layer includes but is not limited to 1 µm, 2 µm, 3 µm, 4 µm, 5 µm, 6 µm, 7 µm, 8 µm, 9 µm, 10 µm, and the like.

In embodiments of the present disclosure, a raw material for preparing the reflection enhancing layer includes at least one of titanium oxide, zirconium oxide, tin oxide, zinc oxide, silicon oxide, niobium oxide, aluminum oxide, chromium oxide, magnesium oxide, germanium oxide, gallium oxide, antimony oxide, and platinum oxide.

The reflection enhancing layer may be a single-layer structure, and is prepared from any one of the foregoing metal oxide. Alternatively, the reflection enhancing layer may be a multi-layer structure, and a plurality of layers included in the reflection enhancing layer are separately prepared by using different metal oxide.

The reflection enhancing layer is prepared from the foregoing metal oxide, so that reflectivity of UV light with a wavelength of 280 nm to 400 nm is greater than or equal to 20%, and reflectivity of UV light with a wavelength of 400 nm to 700 nm in a visible light region is less than or equal to 5%.

In embodiments of the present disclosure, a raw material for preparing the smudge-resistant layer is at least one of fluorine-containing polyfunctional acrylic resin, fluorine-containing epoxy-modified acrylic resin, fluorine-containing polyurethane-modified acrylic resin, fluorine-containing fluoropolyether-modified acrylic resin, fluorine-containing polysiloxane resin, fluorine-containing epoxy resin, and fluorine-containing polyurethane resin. Fluorine element is added to the foregoing resins to improve hydrophobic and oil-phobic properties of the smudge-resistant layer.

For example, the smudge-resistant layer in embodiments of the present disclosure is an anti-fingerprint coating (Anti-fingerprint Coating, AFC). Because the anti-fingerprint coating has good hydrophobic and oil-phobic properties, the composite material has excellent smooth hand feeling and is not easy to produce a fingerprint. All anti-fingerprint coatings currently disclosed in the art are applicable to embodiments of the present disclosure.

In some examples, modulus of the first protective layer may be 1 GPa to 10 GPa, including but not limited to 1 GPa, 2 GPa, 3 GPa, 4 GPa, 5 GPa, 6 GPa, 7 GPa, 8 GPa, 9 GPa, 10 GPa, and the like, so that the first protective layer has expected hardness.

In some examples, modulus of the smudge-resistant layer may be 1 GPa to 10 GPa, including but not limited to 1 GPa, 2 GPa, 3 GPa, 4 GPa, 5 GPa, 6 GPa, 7 GPa, 8 GPa, 9 GPa, 10 GPa, and the like, so that the smudge-resistant layer has expected hardness.

For the smudge-resistant layer, a water droplet angle is greater than or equal to 90°, and an oil droplet angle is greater than or equal to 50°. For example, the water droplet angle of the smudge-resistant layer may further be greater than or equal to 100°, 110°, 120°, 130°, and the like, and the oil droplet angle may further be greater than or equal to 60°, 70°, 80°, and 90°. In this way, the smudge-resistant layer has excellent hydrophobic and oil-phobic properties, so that the smudge cannot be attached to the surface of the smudge-resistant layer.

The composite material provided in embodiments of the present disclosure may be designed in a plurality of structural forms, so that the composite material is applied to a plurality of application scenarios.

In an example, a structural form of the composite material is a plate. The composite material in the plate form may be cut into a plurality of shapes, or may be formed into a plurality of shapes by using a mold. The composite material is applicable to a tiled state. For example, the plate may be used as a surface protection pad, for example, used for a desktop.

In another example, a structural form of the composite material is a case. For example, the case may be a protective case for a handheld device, and the handheld device includes but is not limited to a mobile phone, a tablet computer, a camera, a remote control, and the like.

In some embodiments, an embodiment of the present disclosure provides a protective case for a mobile phone. A material of the protective case for the mobile phone is the composite material in embodiments of the present disclosure. In this way, even if a user touches the protective case for the mobile phone for a long time after a hand of the user sweats or chemicals such as cosmetics and hand cream remains in the hand of the user, the protective case for the mobile phone does not turn yellow.

The plate or the case provided in embodiments of the present disclosure has all the advantages mentioned in the composite material. In other words, the plate or the case provided in embodiments of the present disclosure has at least excellent UV yellowing resistance, a smudge yellowing resistance, and impact resistance. Further, the case has excellent smoothness and anti-fingerprint performance.

In addition, an embodiment of the present disclosure further provides a method for preparing a composite material. The method for preparing the composite material includes: preparing a transparent substrate layer; and preparing a first protective layer on at least one surface of the transparent substrate layer. Therefore, the composite material including the transparent substrate layer and the first protective layer can be prepared.

Further, the method for preparing the composite material provided in this embodiment of the present disclosure further includes: preparing a second protective layer on a surface that is of the first protective layer and that is away from the transparent substrate layer. Therefore, the composite material including the transparent substrate layer, the first protective layer, and the second protective layer can be prepared.

Further, the method for preparing the composite material provided in this embodiment of the present disclosure further includes: preparing a third protective layer on a surface that is of the second protective layer and that is away from the first protective layer. Therefore, the composite material including the transparent substrate layer, the first protective layer, the second protective layer, and the third protective layer can be prepared.

For preparation of the transparent substrate layer, a process for preparing the transparent substrate layer may be adaptively designed according to a structural form of the composite material. For example, for a composite material in a form of a plate, a method for preparing a transparent substrate layer includes: preparing the transparent substrate layer on a substrate by using a raw material for preparing the transparent substrate layer and by using a coating process. Some applicable coating processes include but are not limited to: spray coating, dip coating, scrape coating, roll coating, ultrasonic spray coating, slot die coating, and the like.

For a composite material in a form of a case, a method for preparing a transparent substrate layer includes: obtaining the transparent substrate layer by using a raw material for preparing the transparent substrate layer and by using an injection molding process, a hot pressing molding process, or an extrusion molding process. When the transparent substrate layer is formed by injection molding, a mold having a specific structural form is used to obtain the transparent substrate layer having the specific structural form.

For preparation of the first protective layer, the first protective layer may be prepared on the transparent substrate layer by using a material for preparing the first protective layer and by using a coating process. Some applicable coating processes include but are not limited to: spray coating, dip coating, scrape coating, roll coating, ultrasonic spray coating, slot die coating, and the like.

For preparation of the second protective layer and the third protective layer, according to materials for preparing the second protective layer and the third protective layer, processes for preparing the second protective layer and the third protective layer are respectively shown below. When one of the second protective layer and the third protective layer is a reflection enhancing layer, the reflection enhancing layer is prepared on a surface of a corresponding layer by using a raw material for preparing the reflection enhancing layer and by using an evaporation deposition process.

When one of the second protective layer and the third protective layer is a smudge-resistant layer, the smudge-resistant layer is prepared on a surface of a corresponding layer by using a raw material for preparing the smudge-resistant layer and by using an evaporation deposition process or a coating process. Some applicable coating processes include but are not limited to: spray coating, dip coating, scrape coating, roll coating, ultrasonic spray coating, slot die coating, and the like.

The following describes preferred implementations of this application in more detail. Although the following describes preferred implementations of this application, it should be understood that this application may be implemented in various forms and should not be limited by the implementations described herein. If no specific technology or condition is specified in embodiments, a technology or condition described in the literature in the art or a product specification shall be followed. Reagents and instruments used without indicating a manufacturer are all conventional products that can be purchased commercially.

### Embodiment 1

Embodiment 1 provides a composite material. Refer to FIG. 2. The composite material includes a transparent substrate layer 100 with a thickness of 2 mm, a first protective layer 200 with a thickness of 20 µm, and a second protective layer 300 with a thickness of 200 nm. The first protective layer 200 is laminated on an upper surface of the transparent substrate layer 100. The second protective layer 300 is a reflection enhancing layer 001, and is laminated on an upper surface of the first protective layer 200.

The transparent substrate layer 100 is prepared from the following raw materials: aliphatic TPU with a mass percentage of 96%, an ultraviolet absorber 326 with a mass percentage of 3%, and an antioxidant 245 with a mass percentage of 1%. The aliphatic TPU is prepared by using hexamethylene diisocyanate (HDI) as a monomer.

A material of the first protective layer is epoxy-modified acrylic resin. The second protective layer 300 is an anti-fingerprint coating, and is prepared from a Shin-Etsu fluorine anti-fouling coating.

A UV yellowing resistance test is performed on the composite material provided in Embodiment 1. A UVA bulb is used, and the composite material is successively irradiated by ultraviolet rays at 50°C for 4 hours and condensed at 60°C for 4 hours. After the test continues for 100 hours, no yellowing phenomenon is detected on the composite material. A smudge and yellowing resistance test is performed on the composite material provided in Embodiment 1. A mixture, including tocopheryl acetate, of cosmetics and water (a mass ratio of the cosmetics to the water is 1: 1) is coated on a surface of the composite material, and then the composite material is stored in a sealed environment. After 100 hours, no yellowing phenomenon is detected on the composite material.

It can be seen that, in the composite material provided in Embodiment 1, the aliphatic TPU is used as a matrix material, and because there is no benzene ring in the aliphatic TPU, irreversible yellowing does not occur due to formation of quinoneimine in UV irradiation. The ultraviolet absorber 326 and the antioxidant 245 are added to the transparent substrate layer 100, and work together to absorb UV lights emitted into the transparent substrate, and further improve UV yellowing resistance of the transparent substrate layer. The first protective layer 200 is provided, so that good density of the first protective layer 200 can effectively prevent a smudge from entering the transparent substrate layer 100, reduce penetration of the smudge to the transparent substrate layer 100, and effectively improve smudge yellowing resistance of the transparent substrate layer 100. The second protective layer 300 is provided, so that the surface of the composite material has excellent hydrophobic and oil-phobic properties, to effectively reduce a residual smudge on the surface and further improve smudge yellowing resistance of the composite material.

### Embodiment 2

Embodiment 2 provides a composite material. Refer to FIG. 3. The composite material includes a transparent substrate layer 100 with a thickness of 2 mm, a first protective layer 200 with a thickness of 20 µm, and a second protective layer 300 with a thickness of 6 µm. The first protective layer 200 is laminated on an upper surface of the transparent substrate layer 100. The second protective layer 300 is a smudge-resistant layer 002, and is laminated on an upper surface of the first protective layer 200.

A raw material for preparing the transparent substrate layer 100 is the same as that in Embodiment 1, and details are not described herein again. A material of the first protective layer is polyurethane-modified acrylic resin. The second protective layer 300 is a reflection enhancing layer 001, and a material of the second protective layer 300 is zirconium dioxide.

A UV yellowing resistance test and a smudge yellowing resistance test are performed on the composite material provided in Embodiment 2 by using a yellowing resistance test method that is the same as that in Embodiment 1, and no yellowing phenomenon is detected on the composite material.

In the composite material provided in Embodiment 2, an ultraviolet absorber 326 and an antioxidant 245 are added to the transparent substrate layer 100, to effectively improve UV yellowing resistance of the transparent substrate layer. The first protective layer 200 is provided, so that good density of the first protective layer 200 can effectively prevent a smudge from entering the transparent substrate layer 100, reduce penetration of the smudge to the transparent substrate layer 100, and effectively improve smudge yellowing resistance of the transparent substrate layer 100. The second protective layer 300 is provided, so that more UV lights are reflected while high transmittance of the composite material is ensured, to further improve UV yellowing resistance of the composite material.

### Embodiment 3

Embodiment 3 provides a composite material. Refer to FIG. 4. The composite material includes a transparent substrate layer 100 with a thickness of 2 mm, a first protective layer 200 with a thickness of 20 µm, a second protective layer 300 with a thickness of 200 nm, and a third protective layer 400 with a thickness of 5 µm. The first protective layer 200 is laminated on an upper surface of the transparent substrate layer 100. The second protective layer 300 is a reflection enhancing layer 001, and is laminated on an upper surface of the first protective layer 200. The third protective layer 400 is a smudge-resistant layer 002, and is laminated on an upper surface of the second protective layer 300.

A raw material for preparing the transparent substrate layer 100 is the same as that in Embodiment 1, and details are not described herein again. A material of the first protective layer 200 is aliphatic polyurethane methyl hexaacrylate resin. A material of the second protective layer 300 is zirconium dioxide. The third protective layer 400 is an anti-fingerprint coating, and is prepared from a Shin-Etsu fluorine anti-fouling coating.

A UV yellowing resistance test and a smudge yellowing resistance test are performed on the composite material provided in Embodiment 3 by using a yellowing resistance test method that is the same as that in Embodiment 1, and no yellowing phenomenon is detected on the composite material.

In the composite material provided in Embodiment 3, an ultraviolet absorber 326 and an antioxidant 245 are added to the transparent substrate layer 100, to effectively improve UV yellowing resistance of the transparent substrate layer. The first protective layer 200 is provided, so that good density of the first protective layer 200 can effectively prevent a smudge from entering the transparent substrate layer 100, reduce penetration of the smudge to the transparent substrate layer 100, and effectively improve smudge yellowing resistance of the transparent substrate layer 100. The second protective layer 300 is provided, so that more UV lights are reflected while high transmittance of the composite material is ensured, to further improve UV yellowing resistance of the composite material. The third protective layer 400 is provided, so that a surface of the composite material has excellent hydrophobic and oil-phobic properties, to effectively reduce a residual smudge on the surface and further improve smudge yellowing resistance of the composite material.

### Embodiment 4

Embodiment 4 provides a composite material. For a structure of the composite material, refer to FIG. 4. The composite material in Embodiment 4 is basically the same as the composite material in Embodiment 3, and a difference lies in that aliphatic TPU in the transparent substrate is changed to aromatic TPU. The aromatic TPU is prepared by using methylene diphenyl diisocyanate (MDI) as a monomer.

A UV yellowing resistance test and a smudge yellowing resistance test are performed on the composite material provided in Embodiment 4 by using a yellowing resistance test method that is the same as that in Embodiment 1, and no yellowing phenomenon is detected on the composite material. It can be learned that the composite material can also achieve excellent UV yellowing resistance effect and smudge yellowing resistance effect.

### Embodiment 5

Embodiment 5 provides a composite material. For a structure of the composite material, refer to FIG. 4. The composite material in Embodiment 5 is basically the same as the composite material in Embodiment 3, and a difference lies in that aliphatic TPU in a transparent substrate is changed to TPEE.

A UV yellowing resistance test and a smudge yellowing resistance test are performed on the composite material provided in Embodiment 4 by using a yellowing resistance test method that is the same as that in Embodiment 1, and no yellowing phenomenon is detected on the composite material. It can be learned that the composite material can also achieve excellent UV yellowing resistance effect and smudge yellowing resistance effect, and especially, the smudge yellowing resistance effect of the composite material is better.

The foregoing descriptions are merely intended to help a person skilled in the art understand the technical solutions of the present disclosure, and are not intended to limit the present disclosure. Any modification, equivalent replacement, or improvement made without departing from the spirit and principle of the present disclosure shall fall within the protection scope of the present disclosure.

## Claims

1. A composite material, wherein the composite material comprises a transparent substrate layer and a first protective layer laminated on the transparent substrate layer;
a raw material for preparing the transparent substrate layer comprises a matrix material, an ultraviolet absorber, and an antioxidant; and
at least one of polyfunctional acrylic resin, epoxy-modified acrylic resin, polyurethane-modified acrylic resin, fluoropolyether-modified acrylic resin, polysiloxane resin, epoxy resin, and polyurethane resin is selected as a raw material for preparing the first protective layer.

2. The composite material according to claim 1, wherein a degree of cure of the first protective layer is greater than or equal to 85%.

3. The composite material according to claim 1, wherein the composite material further comprises a second protective layer, and one of a reflection enhancing layer and a smudge-resistant layer is selected as the second protective layer.

4. The composite material according to claim 3, wherein the composite material further comprises a third protective layer, and the other of the reflection enhancing layer and the smudge-resistant layer is selected as the third protective layer.

5. The composite material according to claim 3, wherein a raw material for preparing the reflection enhancing layer comprises at least one of titanium oxide, zirconium oxide, tin oxide, zinc oxide, silicon oxide, niobium oxide, aluminum oxide, chromium oxide, magnesium oxide, germanium oxide, gallium oxide, antimony oxide, and platinum oxide.

6. The composite material according to claim 3, wherein a raw material for preparing the smudge-resistant layer is at least one of fluorine-containing polyfunctional acrylic resin, fluorine-containing epoxy-modified acrylic resin, fluorine-containing polyurethane-modified acrylic resin, fluorine-containing fluoropolyether-modified acrylic resin, fluorine-containing polysiloxane resin, fluorine-containing epoxy resin, and fluorine-containing polyurethane resin.

7. The composite material according to claim 3, wherein the smudge-resistant layer is an anti-fingerprint coating.

8. The composite material according to any one of claims 1 to 7, wherein the matrix material meets at least one of the following conditions: transmittance ≥ 50%, haze ≤ 20%, hardness ≥ Shore hardness 60 A, tensile strength ≥ 30 MPa, and elongation at break ≥ 50%.

9. The composite material according to any one of claims 1 to 7, wherein at least one of TPU, TPE, TPEE, PC, PMMA, TPO, and transparent nylon is selected as the matrix material.

10. The composite material according to any one of claims 1 to 9, wherein in the raw material for preparing the transparent substrate layer, a mass percentage of the matrix material ranges from 94% to 97%, a mass percentage of the ultraviolet absorber ranges from 2% to 5%, and a mass percentage of the antioxidant ranges from 0.1% to 1.5%.

11. The composite material according to any one of claims 1 to 10, wherein a structural form of the composite material is a plate.

12. The composite material according to any one of claims 1 to 10, wherein a structural form of the composite material is a case.

13. The composite material according to claim 12, wherein the case is a protective case for a handheld device, and the handheld device comprises a mobile phone, a tablet computer, a camera, or a remote control.

14. A method for preparing a composite material, wherein the composite material is claimed according to any one of claims 1 to 13; and
the method for preparing the composite material comprises: preparing the transparent substrate layer; and
preparing the first protective layer on at least one surface of the transparent substrate layer.

15. The method for preparing the composite material according to claim 14, wherein the method for preparing the composite material further comprises: preparing the second protective layer on a surface that is of the first protective layer and that is away from the transparent substrate layer.

16. The method for preparing the composite material according to claim 15, wherein the method for preparing the composite material further comprises: preparing the third protective layer on a surface that is of the second protective layer and that is away from the first protective layer.
